Europäisches Patentamt

European Patent Office

Office européen des brevets

(11) Veröffentlichungsnummer : **0 087 057**
**B1**

(12) # EUROPÄISCHE PATENTSCHRIFT

(45) Veröffentlichungstag der Patentschrift :
20.08.86

(21) Anmeldenummer : 83101169.7

(22) Anmeldetag : 08.02.83

(51) Int. Cl.⁴ : **H 02 K   7/108,** H 02 K   9/06,
**F 16 D   7/00**

(54) **Drehstromgenerator mit kraftschlüssig gekuppeltem Lüfterrad.**

(30) Priorität : 18.02.82 DE 3205757

(43) Veröffentlichungstag der Anmeldung :
31.08.83 Patentblatt 83/35

(45) Bekanntmachung des Hinweises auf die Patenterteilung : 20.08.86 Patentblatt 86/34

(84) Benannte Vertragsstaaten :
DE FR GB IT

(56) Entgegenhaltungen :
DE-A- 2 010 088
FR-A- 1 177 945
GB-A- 2 061 461

(73) Patentinhaber : **ROBERT BOSCH GMBH**
**Postfach 50**
**D-7000 Stuttgart 1 (DE)**

(72) Erfinder : **Ragaly, Istvan, Dipl.-Ing.**
**Hermann-Essig-Strasse 102**
**D-7141 Schwieberdingen (DE)**

## Beschreibung

Die Erfindung betrifft einen Drehstromgenerator zum Antrieb durch eine Brennkraftmaschine über eine Riemenscheibe, die mit der Läuferwelle des Generators drehfest verbunden ist und das Lüfterrad des Generators über eine kraftschlüssige Kupplung antreibt, die zwei auf der Läuferwelle angeordnete Kugellager umfaßt, von denen eines mit seinem Außenring im Lüfterrad befestigt ist.

Ein Generator dieser Art ist aus der DE-OS-29 42 737 bekannt. Dort sitzen die beiden zur kraftschlüssigen Kupplung der Läuferwelle mit dem Lüfterrad dienenden Kugellager nebeneinander auf der Läuferwelle, wobei ihre beiden Außenringe in der Bohrung einer an das Lüfterrad angegossenen Nabe so eingepaßt sind, daß der näher am Lagerschild des Generators liegende Außenring mit Preßsitz in der Nabe befestigt ist, während der Außenring des der Riemenscheibe näherliegenden Kugellagers in der Nabenbohrung bei unterschiedlichen Drehzahlen zwischen Läuferwelle und Lüfterrad gleiten kann. Es hat sich jedoch gezeigt, daß bei den für das Lüfterrad üblichen Gußwerkstoffen infolge der Gleitreibung das außenliegende Kugellager schon nach geringer Laufzeit sich in der Nabe lockert und zu unsicheren Mitnahmemomenten führt.

Der Erfindung liegt die Aufgabe zugrunde, für einen Generator der eingangs beschriebenen Art eine Kupplung zu schaffen, die eine hohe Lebensdauer hat und das ursprünglich eingestellte Mitnahmemoment beibehält. Zur Lösung dieser Aufgabe sind die im kennzeichnenden Teil des Anspruchs 1 angegebenen Maßnahmen vorgesehen.

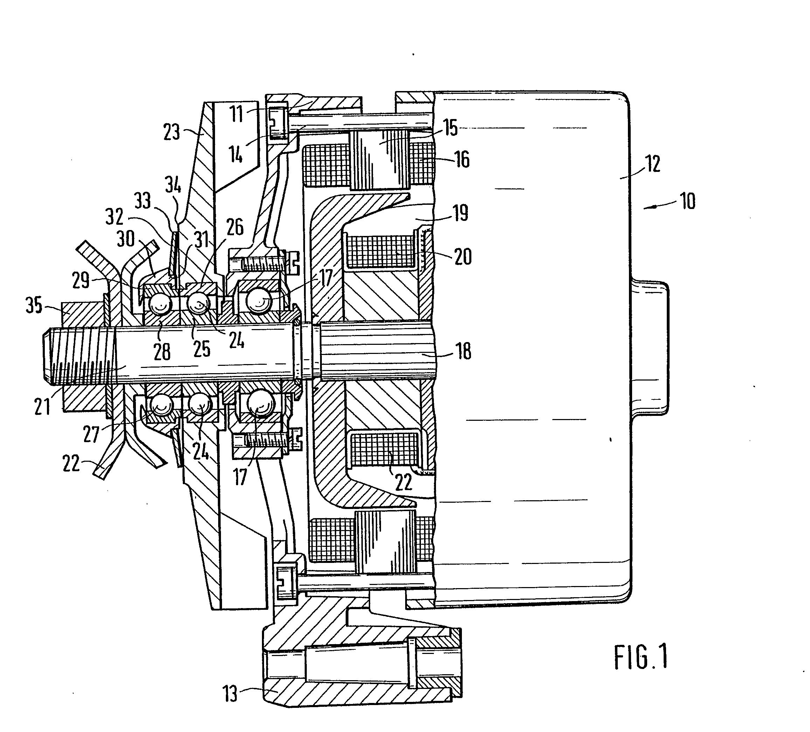

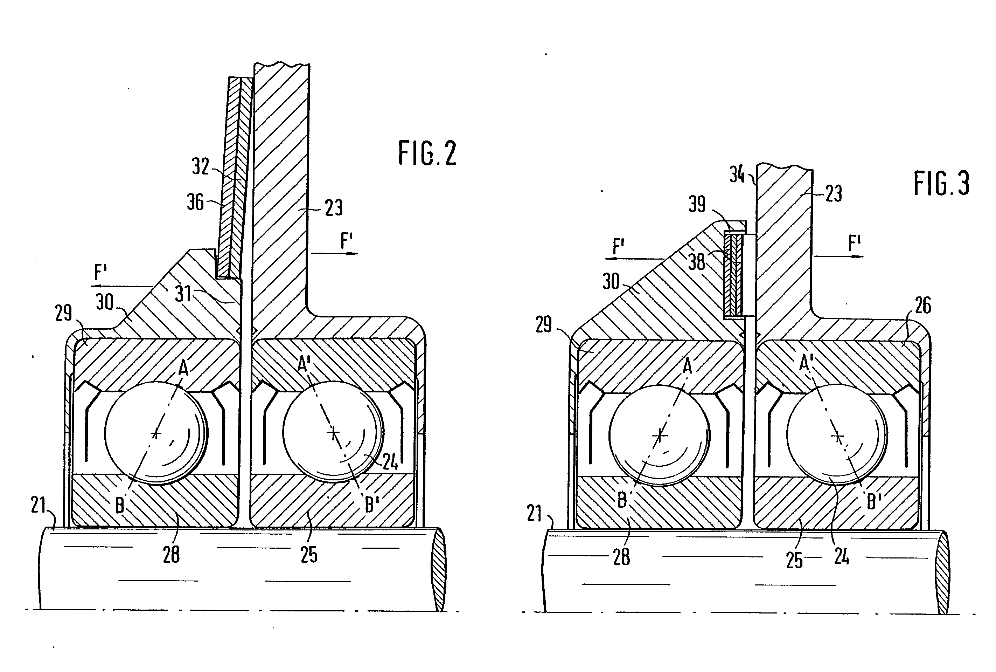

In der Zeichnung ist in Figur 1 ein erfindungsgemäßer Drehstromgenerator teilweise in seinem axialen Längsschnitt und teilweise in der Ansicht wiedergegeben. Die Figuren 2 bis 8 zeigen jeweils in axialem Halbschnitt verschiedene Ausführungsformen für die Kupplung, wobei die Riemenscheibe weggelassen und das Lüfterrad nur ausschnittsweise wiedergegeben ist.

Der in Figur 1 dargestellte Drehstromgenerator 10 hat ein antriebsseitiges Lagerschild 11 und ein schleifringseitiges Lagerschild 12. Am antriebsseitigen Lagerschild 11 ist ein Schwenkarm 13 angeformt. Mit Hilfe von Schrauben 14 ist ein Ständerblechpaket 15, das eine über seinen Umfang gleichmäßig verteilte Drehstromwicklung 16 trägt, zwischen den beiden Lagerschilden eingespannt. Im antriebsseitigen Lagerschild 11 sitzt ein Kugellager 17, das zusammen mit einem nicht dargestellten zweiten Kugellager, welches im antriebsfernen Lagerschild 12 sitzt, zur Lagerung der Läuferwelle 18 dient, die im Inneren des Generatorgehäuses einen Klauenpolläufer 19 und eine von diesem umschlossene Erregerwicklung 20 trägt und auf ihrem aus dem Lagerschild 11 vorstehenden Wellenende 21 über eine Keilriemenscheibe 22 von einer nicht dargestellten Brennkraftmaschine angetrieben werden kann.

Dicht am antriebsseitigen Lagerschild 11 ist auf dem Wellenende 21 ein Lüfterrad 23 mit Hilfe eines Kugellagers 24, dessen Innenring bei 25 und dessen Außenring bei 26 angedeutet ist, gegenüber der Läuferwelle 18 drehbar gelagert.

Zwischen dem Lüfterrad 23 und der Riemenscheibe 22 ist die erfindungsgemäße Mitnahmekupplung angeordnet, zu welcher beim Ausführungsbeispiel nach Figur 1 ein weiteres, außenliegendes Kugellager 27 gehört, dessen Innenring 28 drehfest auf dem Wellenende 21 festsitzt. Der zugehörige Außenring 29 sitzt mit Preßsitz in einer Nabe 30, die einen kurzen, axialen Ansatz 31 hat, auf den die Bohrung einer schwach kegeligen Tellerfeder 32 aufgesetzt ist, die mit ihrem Außenrand 33 gegen die scheibenförmige Stirnseite 34 des Lüfterrades anliegt.

Mit Hilfe einer auf den nicht näher bezeichneten Gewindeabschnitt des Läuferwellenendes 21 aufgeschraubten Mutter 35 können die Riemenscheibe 22, die Innenringe 28 und 25, auf der Welle 18 gegeneinander und gegen das Kugellager 17 fest verspannt werden. Dabei ergibt sich eine elastische Vorspannung der Tellerfeder 32, die bestrebt ist, den Aussenring 29 vom Lüfterrad 23 wegzudrücken. Je höher diese Vorspannung ist, desto größer ist der Wert des erzeugten Mitnahmemoments und demgemäß der Drehzahl, mit dem bzw. der das Lüfterrad 23 angetrieben werden kann.

Der Vorteil besteht darin, daß man durch die Dimensionierung der Tellerfeder 32 diesen Grenzwert festlegen kann und daß dieser Wert bei unterschiedlichen Betriebsbedingungen beibehalten wird.

Soweit in den Figuren 2 bis 8 gleiche Teile wie beim Ausführungsbeispiel nach Figur 1 verwendet werden, sind sie mit den gleichen Bezugszeichen wie in Figur 1 versehen.

Beim Ausführungsbeispiel nach Figur 2 sind zwei Tellerfedern 32 und 36 vorgesehen, die wie in Figur 1 elastisch vorgespannt werden können.

Durch die in der Zeichnung bei F′ angedeutete Federkraft ergibt sich eine Schrägstellung der Rollebene der Kugeln des äußeren und des inneren Kugellagers, die in Figur 2 durch strichpunktierte Linien A, B und A′ und B′ angedeutet ist. Durch diese Federkraft wird das Mitnahmemoment zwischen den Innenringen und den Außenringen erhöht, und zwar umso mehr, je größer die Federkraft F′ wird.

Beim Ausführungsbeispiel nach Figur 3 wird diese Federkraft durch gewellte Federringe 38 erzeugt, die in eine Ringnut 39 in der Nabe 30 eingelegt sind und gegen die stirnseitige Scheibenfläche 34 des Lüfterrades 23 drücken.

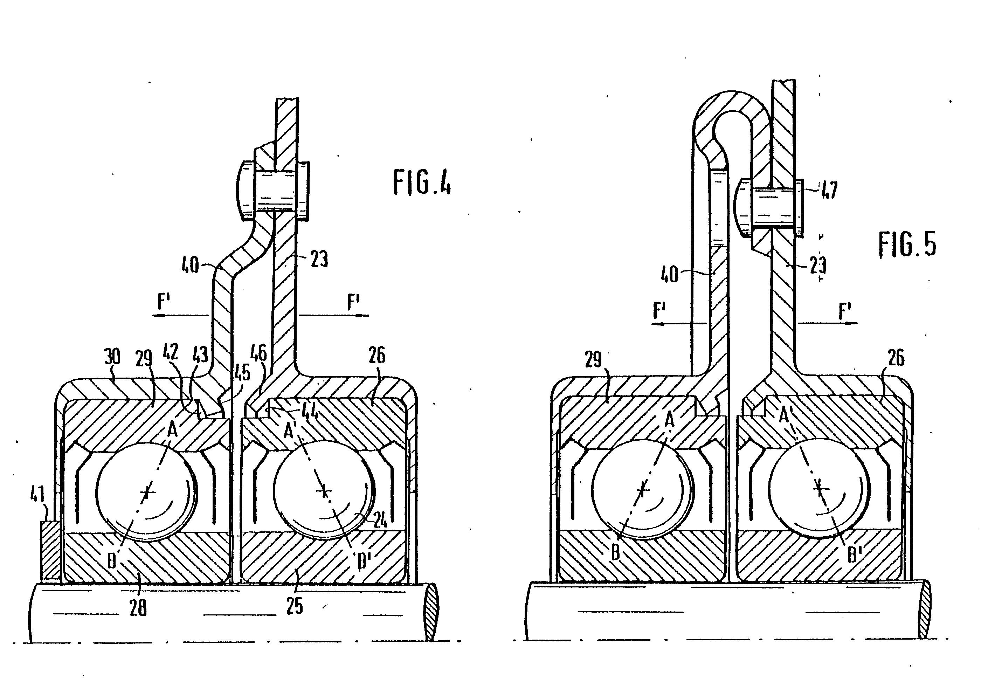

Beim Ausführungsbeispiel nach Figur 4 wirkt die ringscheibenförmige Randzone 40, die an die Nabe 30 angeformt ist als Feder, welche die Federkraft F′ erzeugt, wenn die Mutter 35 angezogen wird und dabei über die Ringscheibe 41 auf den Innenring 28 drückt. An den einander zugekehrten Stirnseiten der mit einem Preßsitz in der Nabe 30 bzw. dem Lüfterrad 23 befestigten Außenringe 29 und 26 ist beim Ausführungsbeispiel nach Figur 4 jeweils eine Nut 42 mit zwei Schulterflächen 43 bzw. 44 freigedreht, gegen die jeweils einer von zwei Ansätzen 45 und 46 gepreßt ist, wodurch der Außenring gegen axiale Verschiebung gesichert wird.

Beim Ausführungsbeispiel nach Figur 5 ist ebenso wie beim Ausführungsbeispiel nach Figur 4 an die Nabe 30 eine scheibenförmige Randzone 40 angeformt, die gegen die Lüfterscheibe 23 und die Läuferwelle zurückgebogen ist und dort mit Hilfe eines durchgesteckten Nietes 47 mit dem Lüfterrad 23 verbunden ist.

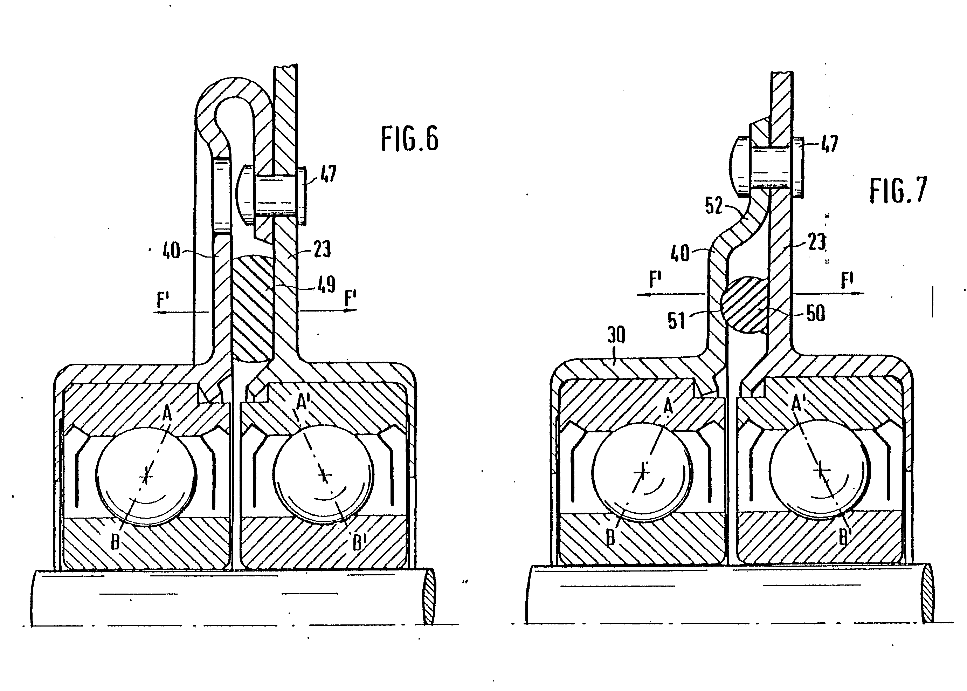

Beim Ausführungsbeispiel nach Figur 6 ist darüber hinaus zwischen der Randzone 40 und der Stirnseite des Lüfterrades 23 ein aus Gummi oder elastischem Kunststoff bestehender Ring 49 eingelegt, der als Dichtung wirkt und Schwingungen dämpft.

Beim Ausführungsbeispiel nach Figur 7 ist ein O-Ring 50 in eine passende Ringnut 51 eingelegt, wobei der ringförmige Ansatz 40 an seiner Randzone 52 abgekröpft ist und mit dem Lüfterrad 23 durch Niete 47 verbunden ist.

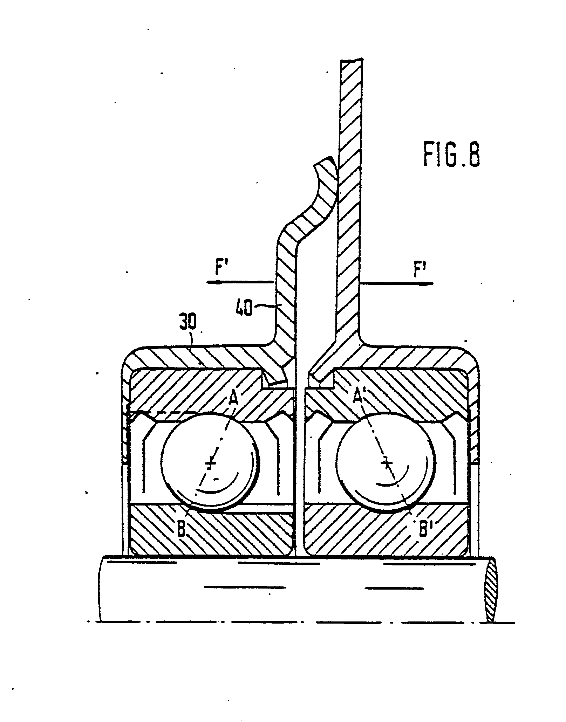

Ebenso wie beim Ausführungsbeispiel nach Figur 7 ist bei der Ausführung nach Figur 8 die ringscheibenförmige Randzone 40 der Nabe 30 als Tellerfeder ausgenützt, die sich beim Anziehen der Mutter 35 elastisch in axialer Richtung verformen und dabei die Federkraft F' erzeugen kann.

## Patentansprüche

1. Drehstromgenerator (10) zum Antrieb durch eine Brennkraftmaschine über eine Riemenscheibe (22), die mit der Läuferwelle (18) des Generators drehfest verbunden ist und das Lüfterrad (23) des Generators über eine kraftschlüssige Kupplung antreibt, die zwei auf der Läuferwelle angeordnete Kugellager (24, 27) umfaßt, von denen eines mit seinem Außenring (26) im Lüfterrad befestigt ist, dadurch gekennzeichnet, daß das andere Kugellager (27) an seinem Außenring (29) gegen das Lüfterrad (23) über eine in ihrer elastischen Vorspannung einstellbare Stützeinrichtung (32, 36, 39, 40) abgestützt ist.

2. Generator nach Anspruch 1, dadurch gekennzeichnet, daß der Außenring (29) des anderen Kugellagers in einer Nabe (30) untergebracht ist, die wenigstens eine sich gegen das Lüfterrad (23) abstützende Feder (32, 36, 39) trägt.

3. Generator nach Anspruch 1 oder 2, dadurch gekennzeichnet, daß die Feder als Tellerfeder (32, 36) ausgebildet ist.

4. Generator nach Anspruch 3, dadurch gekennzeichnet, daß die Tellerfeder (32, 36) in eine Nut (42, 43, 44) im Aussenring (29) des anderen Kugellagers eingreift.

5. Generator nach Anspruch 2, dadurch gekennzeichnet, daß die Feder als wellenförmige Ringscheibenfeder ausgebildet ist.

6. Generator nach Anspruch 2, dadurch gekennzeichnet, daß die Nabe (30) eine radial abstehende, scheibenförmige Randzone (40) hat, die sich federelastisch gegen das Lüfterrad abstützt.

7. Generator nach Anspruch 6, dadurch gekennzeichnet, daß der Randbereich abgekröpft (Figur 7) oder gegen die Läuferwelle (18, 21) zurückgebogen ist.

8. Generator nach Anspruch 7, dadurch gekennzeichnet, daß der Randbereich des an der Nabe (30) sitzenden, scheibenförmigen Ansatzes (40) mit dem Lüfterrad (23) durch Niete (47) oder Schweißen verbunden ist.

9. Generator nach einem der Ansprüche 2 bis 7, dadurch gekennzeichnet, daß der Außenring (29) des anderen Kugellagers zur Sicherung seines axialen Sitzes in der Nabe (30) eine ausgedrehte Schulterfläche (43) aufweist, gegen die ein radial gegen die Läuferwelle gerichteter Ansatz (45) gepreßt ist.

## Claims

1. Three-phase generator (10) to be driven by an internal combustion engine via a belt pulley (22) which is joined to the rotor shaft (18) of the generator to rotate therewith and drives the fan impeller (23) of the generator via a friction-locked coupling which comprises two ball bearings (24, 27) which are arranged on the rotor shaft and one of which is attached with its outer ring (26) in the fan impeller, characterised in that the other ball bearing (27) is supported at its outer ring (29) against the fan impeller (23) via a supporting device (32, 36, 39, 40) which is adjustable in its elastic pretension.

2. Generator according to Claim 1, characterised in that the outer ring (29) of the other ball bearing is accommodated in a hub (30) which carries at least one spring (32, 36, 39) which is supported against the fan impeller (23).

3. Generator according to Claim 1 or 2, characterised in that the spring is constructed as a cup spring (32, 36).

4. Generator according to Claim 3, characterised in that the cup spring (32, 36) engages into a groove (42, 43, 44) in the outer ring (29) of the other ball bearing.

5. Generator according to Claim 2, characterised in that the spring is constructed as a corrugated annular disc spring.

6. Generator according to Claim 2, characterised in that the hub (30) has a radially projecting disc-shaped edge zone (40) which is spring-elastically supported against the fan impeller.

7. Generator according to Claim 6, characterised in that the edge area is offset (Figure 7) or bent back against the rotor shaft (18, 21).

8. Generator according to Claim 7, characterised in that the edge area of the disc-shaped projection (40) located on the hub (30) is joined to the fan impeller (23) by a rivet (47) or welding.

9. Generator according to one of Claims 2 to 7, characterised in that the outer ring (29) of the other ball bearing, for securing its axial seating in the hub (30), has a hollowed-out shoulder face (43) against which a projection (45) is pressed which is radially pointed towards the rotor shaft.

**Revendications**

1. Alternateur (10) pour entraînement par un moteur à combustion interne, par l'intermédiaire d'une poulie (22) solidarisée, sans possibilité de rotation relative avec l'arbre (18) du rotor de l'alternateur et entraînant la turbine (23) du ventilateur de l'alternateur par l'intermédiaire d'un accouplement de par la force comportant deux roulements à billes (24, 27) disposés sur l'arbre du rotor et dont l'un est fixé à la turbine du ventilateur par sa bague extérieure (26), caractérisé en ce que l'autre roulement à billes (27), par sa bague extérieure (29), s'appuie contre la turbine du ventilateur (23) par l'intermédiaire d'un dispositif d'appui (32, 36, 39, 40) à précontrainte élastique réglable.

2. Alternateur selon la revendication 1, caractérisé en ce que la bague extérieure (29) de l'autre roulement à billes est logée dans une couronne (23) qui porte au moins un ressort (32, 36, 39) qui s'appuie contre la turbine du ventilateur (23).

3. Alternateur selon la revendication 1 ou la revendication 2, caractérisé en ce que le ressort est conçu sous forme de rondelle Belleville (32, 36).

4. Alternateur selon la revendication 3, caractérisé en ce que la rondelle Belleville (32, 36) se loge dans une rainure (42, 43, 44) de la bague extérieure (29) de l'autre roulement à billes.

5. Alternateur selon la revendication 2, caractérisé en ce que le ressort est conçu sous forme de rondelle élastique ondulée.

6. Alternateur selon la revendication 2, caractérisé en ce que la couronne (30) présente une zone de bordure (40) en forme de plateau se détachant radialement et s'appuyant élastiquement contre la turbine du ventilateur.

7. Alternateur selon la revendication 6, caractérisé en ce que la zone de bordure est contre-coudée (figure 7) ou rabattue par cintrage contre l'arbre du rotor (18, 21).

8. Alternateur selon la revendication 7, caractérisé en ce que la zone de bordure du prolongement (40) en forme de plateau, qui part de la couronne (30) est reliée à la turbine du ventilateur (23) au moyen de rivets (47) ou par soudure.

9. Alternateur selon l'une des revendications 2 à 7, caractérisé en ce que la bague extérieure (29) de l'autre roulement à billes présente, pour le blocage de son assise axiale dans la couronne (30), une surface d'épaulement (43) usinée au tour contre laquelle appuie un épaulement (45) dirigé vers l'arbre du rotor.

FIG.1

FIG.2

FIG.3

0 087 057

FIG.4

FIG.5

FIG.6

FIG.7

0 087 057

FIG.8